# EUROPEAN PATENT APPLICATION

(11) **EP 0 989 420 A1**
(43) Date of publication of application: **29.03.2000**
(21) Application number: 99939852.2
(22) Date of filing: 16.03.1999
(51) Int. Cl.: G02B 6/16, G02B 6/00

(54) **WAVELENGTH-MULTIPLEXING OPTICAL TRANSMISSION CHANNEL AND OPTICAL FIBER USED THEREFOR**

(30) Priority: 16.03.1998 JP 8498398
(71) Applicant: The Furukawa Electric Co., Ltd., Tokyo 100-0005 (JP)
(72) Inventor: SUGIZAKI, Ryuichi, The Furukawa Electric Co., Ltd., Tokyo 100-0005 (JP); KOKURA, Kunio, The Furukawa Electric Co., Ltd., Tokyo 100-0005 (JP); TERADA, Jun, The Furukawa Electric Co., Ltd., Tokyo 100-0005 (JP)
(74) Representative: Dealtry, Brian
(86) International application number: JP9901259
(87) International publication number: WO9947953

(57) **Abstract**

The invention relates to a wavelength division multiplex optical transmission line which can compensate a chromatic dispersion of a single mode optical fiber with a low wavelength dependency deviation of transmission loss at a wavelength band of 1550nm. A wavelength division multiplex optical transmission line (10) is laid between an optical transmitter (11) and an optical receiver (14). The wavelength division multiplex optical transmission line (10) is formed by connecting the single mode optical fiber (12) and dispersion compensating optical fiber (13) in series. Boron is doped onto at least one of either the core or cladding of the dispersion compensating optical fiber (13). Since a boron doped optical fiber is connected to the single mode optical fiber (12), the wavelength dependency of transmission loss of the wavelength division multiplex optical transmission line (10) can be decreased, wherein it is possible to flatten the wavelength dependency deviation of the wavelength division multiplex optical transmission line (10).

## Description

### Technical field

The present invention relates to a wavelength division multiplex optical transmission line used for optical transmission at a wavelength band of 1.55µm, and an optical fiber used for a transmission line.

### Background art

The amount of transmission information will remarkably increase in line with the development of the information society, wherein high speed and high bit rates are requisite and indispensable themes in an optical fiber transmission. Recently, a WDM (wavelength division multiplexing) transmission system has been studied for optical transmission as one of the approaches to high speed and high bit rate optical fiber transmission. A wavelength division multiplex transmission system is a system in which signal light consisting of a plurality of wavelengths different from each other is transmitted in a single optical fiber. Light signals can be directly amplified by the appearance of EDFA (erbium doped fiber amplifier), whereby since it is not necessary that light signals are converted to electric signals wavelength by wavelength as in the prior art, wavelength division multiplexing is accelerated in optical transmission.

Further, in order to attempt to increase the capacity of an optical transmission system, it is considered that high speed transmission at a wavelength of 1550nm is carried out by using the existing optical transmission lines. However, a single mode optical fiber (1.3µm zero dispersion optical fiber) which is widely laid as an optical transmission line, at present, has positive dispersion around a wavelength of 1550nm, and the value is approximately 17ps/nm/km. For example, if a long haul transmission of 100km or so is performed, large dispersion such as 1700ps/nm is produced. Therefore, dispersion compensating means are required, wherein, for example, a method for counterbalancing the positive dispersion of the single mode optical fiber by inserting a negative high dispersion fiber (DCF) into an optical transmission line is considered as a practical dispersion compensating method.

The DCF is composed of high relative refractive index ratio Δ of a core with respect to cladding to, for example, 1% or more, and reducing the core diameter. Thus, if the refractive index structure of an optical fiber is suitably set, an optical fiber whose dispersion is negative and absolute value is large can be constructed. In addition, The refractive index profile structure of DCF is described in, for example, Japanese Laid-open Patent Application Publication No. 11620 of 1994. In such a DCF, for example, the refractive index of the core is formed to be high by doping high density germanium (Ge) onto the core, whereby the DCF has the same structure as that of usual optical fibers, except the refractive index structure. Therefore, by inserting and connecting the DCF to an optical transmission line of the single mode optical fiber in series, the chromatic dispersion of the optical transmission line can be compensated, wherein the dispersion compensation can be simply carried out.

In addition, in order to compensate the chromatic dispersion of a single mode optical fiber, if the DCF is an optical fiber which has negative chromatic dispersion and a large absolute value, and at the same time if the DCF is formed to be an optical fiber having a dispersion slope in reverse of the dispersion slope of a single mode optical fiber, dispersion compensation is performed in a wide wavelength range, and it is possible to optimize a transmission line suitable for wavelength division multiplexing.

On the other hand, in addition to the dispersion characteristics, it is also requested, as an optical fiber for wavelength division multiplex transmission, that the wavelength dependency of transmission loss characteristics is low. However, a high density Ge doped core optical fiber which is provided as the above DCF (dispersion compensation fiber) has a large Rayleigh scattering coefficient. Therefore, it is difficult to flatten the transmission loss in a wide wavelength band. In addition, OH is easily mixed in the high density Ge doped core optical fiber, wherein absorption having a peak around a wavelength of 1.39µm is generated by mixture of the OH, whereby there still remains a problem by which the achievement of flattening the loss is hindered.

In detail, it is preferable that a deviation of the wavelength dependency of the transmission loss at a wavelength of 1520nm through 1580nm, which is in a wavelength of 1.55µm of an optical fiber for wavelength division multiplex transmission, is 0.5dB or less as the entirety of the optical transmission line. If the deviation exceeds this value, it is necessary to provide an attenuator in the respective wavelengths in some cases. Therefore, unless the deviation of wavelength dependency of transmission loss, whereby the value of {maximum loss (dB) -minimum loss (dB))/maximum loss (dB)} x 100 is suppressed to be 5% or less, it is difficult to use such optical fibers as those for wavelength division multiplex transmission as they are.

Although the deviation of wavelength dependency of transmission loss of a general single mode optical fiber will be 0.01dB or less per Kilometer, and 0.5 dB or less for 50Km, the deviation of wavelength dependency of transmission loss at a wavelength of 1520nm through 1580nm of the above high density Ge doped core optical fiber is, for example, 15%, which greatly exceeds 5% being the permissible value of the above deviation of wavelength dependency of transmission loss, wherein it was difficult to use the optical fiber as an optical fiber for wavelength division multiplex transmission.

The present invention was developed in order to solve the problems in the prior arts, and it is therefore an object of the invention to provide an optical transmission line, having a small deviation in the wavelength dependency of transmission loss at a wavelength band of 1.55µm, which enables wavelength division multiplex transmission at the wavelength band, and an optical fiber preferably used for the above optical transmission line.

### Disclosure of the invention

In order to achieve the above object, the invention is characterized as described below; that is, a wavelength division multiplex optical transmission line according to the first aspect of the invention is an optical transmission line in which a single mode optical fiber having a zero dispersion wavelength around 1.31µm and a dispersion compensating optical fiber for compensating dispersion characteristics at a wavelength band of 1.55µm of the single mode optical fiber are connected in series, wherein the single mode optical fiber and the dispersion compensating optical fiber have cores covered with cladding, and boron is doped onto at least one of either the core or cladding, in order to compensate the wavelength dependency of loss characteristics of the optical transmission line or the dispersion compensating optical fiber, at least one of either the single mode optical fiber or the dispersion compensating optical fiber.

In addition, a wavelength division multiplex optical transmission line according to the second aspect of the invention is an optical transmission line including a line in which a single mode optical fiber having a zero dispersion wavelength around 1.31µm and a dispersion compensating optical fiber for compensating dispersion characteristics at a wavelength band of 1.55µm of the single mode optical fiber are connected in series, and the optical transmission line is composed so that another optical fiber, which is separate from the single mode optical fiber and the dispersion compensating optical fiber, is connected in series, wherein the separate optical fiber is formed so as to have the core covered by cladding, and boron is doped onto at least one of either the core or the cladding of the separate optical fiber in order to compensate the wavelength dependency of the transmission loss characteristics of the optical transmission line.

Further, a wavelength division multiplex optical transmission line according to the third aspect of the invention is characterized in that, in addition to the construction of a wavelength division multiplex optical transmission line according to the first or second aspect of the invention, an optical fiber to which boron is doped is laid as a line.

Also, a wavelength division multiplex optical transmission line according to the fourth aspect of the invention is characterized in that, in addition to the construction of a wavelength division multiplex optical transmission line according to the first or the second aspect of the invention, an optical fiber to which boron is doped is used as a module.

Further, a first optical fiber used for a wavelength division multiplex optical transmission line according to the invention is an optical fiber which compensates the dispersion characteristics of a wavelength division multiplex optical transmission line, wherein the core of the optical fiber is formed so as to be covered by cladding, boron is doped onto at least one of either the core or cladding of the optical fiber in order to compensate the wavelength dependency of transmission loss characteristics of the optical transmission line or the optical fiber itself, and the core includes germanium with the relative refractive index difference of the maximum refractive index of the core with respect to the cladding exceeding 0.8%.

In addition, a second optical fiber used for a wavelength division multiplex optical transmission line according to the invention is characterized in that, in addition to the construction of the first optical fiber, a chromatic dispersion at a wavelength band of 1.55µm is established at -20ps/nm/km or less.

Also, a third optical fiber used for a wavelength division multiplex optical transmission line according to the invention is characterized in that, in addition to the construction of the first or the second optical fiber, the deviation of the wavelength dependency of transmission loss at a wavelength of 1520nm through 1580nm is 5% or less.

In the invention thus constructed, boron is doped onto at least one of either the core or cladding of an optical fiber which is at least partially used in a wavelength division multiplex optical transmission line. Boron has an absorption peak at a wavelength of 2300mm, wherein if boron exists in the electric field distribution of an optical fiber, the transmission loss is made smaller and smaller at the short wavelength side and the loss is made larger and larger at the long wavelength side at a wavelength of 1550mm, in reverse of the loss wavelength dependency of optical fibers where, due to influences of Rayleigh scattering and absorption by OH, the transmission loss is increased at the short wavelength side and the loss is decreased at the long wavelength side. Therefore, the loss wavelength dependency of optical fibers is counterbalanced, wherein the loss in the same wavelength band can be flattened, and the wavelength dependency deviation of transmission loss at a wavelength of 1550mm can be flattened. Therefore, a boron doped optical fiber according to the invention becomes an optical fiber suited to wavelength division multiplex transmission. Further, if a boron doped optical fiber which compensates the wavelength dependency of loss characteristics is used, it is possible to provide a wavelength division multiplex optical transmission line having excellent transmission quality.

And, for example, germanium is contained in the core of an optical fiber, the relative refractive index difference of the maximum refractive index of core with respect to the cladding is set to 1% or more, and a boron doped optical fiber, according to the invention, is caused to have negative dispersion, whereby it is possible to compensate positive dispersion of optical transmission lines by inserting and connecting a boron doped optical fiber to the existing optical transmission lines. Moreover, as described above, since the loss flattening can be achieved in a wide range required for wavelength division multiplex transmission, it is possible to construct an optical transmission line suited to wavelength division multiplex, using a wavelength division multiplex optical transmission line including a boron doped optical fiber according to the invention.

Further, according to the invention in which the chromatic dispersion at a wavelength band of 1.55µm is -20ps/nm/km or less, by forming the absolute value of negative chromatic dispersion at a wavelength band of 1.55µm to be a greater value, the chromatic dispersion at a wavelength band of 1.55µm in the existing optical transmission lines can be compensated by using a short boron doped optical fiber. Therefore, using a wavelength division multiplex optical transmission line including a boron doped optical fiber according to the invention, it is possible to construct an optical transmission system more suited to a wavelength division multiplex transmission.

Moreover, with the invention in which the wavelength dependency deviation of transmission loss in a wavelength of 1520nm through 1580nm is made to be 5% or less, by setting the wavelength dependency deviation in the wavelength area to 5% or less, a boron doped optical fiber according to the invention can be more securely made into an optical fiber suited to wavelength division multiplex transmission.

### BRIEF DESCRIPTION OF THE DRAWINGS

FIG. 1 is an explanatory view of one preferred embodiment of a wavelength division multiplex optical transmission line according to the invention,
FIG. 2 is an explanatory view showing another preferred embodiment of a wavelength division multiplex optical transmission line,
FIG. 3 is a configurational view showing a refractive index profile of one preferred embodiment of a boron doped optical fiber according to the invention,
FIG. 4 is a graph showing loss characteristics of a boron doped optical fiber, in a wavelength of 1520nm through 1580nm, of the above preferred embodiment formed by doping boron to the core, along with the loss characteristics of an optical fiber as a control,
FIG. 5 is a graph showing loss characteristics of a boron doped optical fiber, in a wavelength of 1520mm through 1580mm, of the above preferred embodiment formed by doping boron to the inner cladding, along with the loss characteristics of an optical fiber as a control,
FIG. 6 is a graph showing loss characteristics of a boron doped optical fiber, in a wavelength of 1520nm through 1580nm, of the above preferred embodiment formed by doping boron to the outer cladding, along with the loss characteristics of an optical fiber as a control,
FIG. 7 is an explanatory view showing a refractive index profile structure of another preferred embodiment of a boron doped optical fiber according to the invention,
FIG. 8 is a graph showing loss characteristics of a boron doped optical fiber, in a wavelength of 1520nm through 1580mm, of the above preferred embodiment formed by doping boron to the core of an optical fiber having a matched cladding type refractive index profile structure, along with the loss characteristics of an optical fiber as a control,
FIG. 9 is a graph showing loss characteristics of a boron doped optical fiber, in a wavelength of 1520nm through 1580nm, of the above preferred embodiment formed by doping boron to the cladding of an optical fiber having a matched cladding type refractive index profile structure, along with the loss characteristics of an optical fiber as a control,
FIG. 10 is a graph showing loss characteristics of a boron doped optical fiber, in a wavelength of 1520nm through 1580nm, of the above preferred embodiment formed by doping boron to the core of an optical fiber having a segment type refractive index profile structure, along with the loss characteristics of an optical fiber as a control,
FIG. 11 is a graph showing loss characteristics of a boron doped optical fiber, in a wavelength of 1520nm through 1580mm, of the above preferred embodiment formed by doping boron to the inner cladding of an optical fiber having a segment type refractive index profile structure, along with the loss characteristics of an optical fiber as a control,
FIG. 12 is a graph showing loss characteristics of a boron doped optical fiber, in a wavelength of 1520mm through 1580mm, of the above preferred embodiment formed by doping boron to the segment layer of an optical fiber having a segment type refractive index profile structure, along with the loss characteristics of an optical fiber as a control, and
FIG. 13 is a graph showing loss characteristics of a boron doped optical fiber, in a wavelength of 1520nm through 1580nm, of the above preferred embodiment formed by doping boron to the outer cladding of an optical fiber having a segment type refractive index profile structure, along with the loss characteristics of an optical fiber as a control.

### BEST MODE FOR CARRYING OUT THE INVENTION

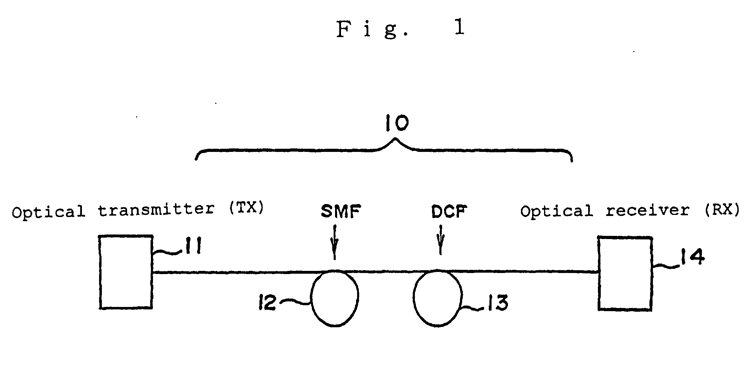

In order to describe the invention in more detail, a description is given of preferred embodiments of the invention with reference to the accompanying drawings. A wavelength division multiplex optical transmission line according to a preferred embodiment of the invention is constructed as shown in, for example, FIG. 1. Herein, a wavelength division multiplex optical transmission line is indicated by 10, an optical transmitter (TX) is indicated by 11, a single mode optical fiber is indicated by 12, a dispersion compensating optical fiber is indicated by 13, and an optical receiver (RX) is indicated by 14. Boron is doped, as a dopant, onto at least one either of the single mode optical fiber 12 or dispersion compensating optical fiber 13. Further, boron is included in at least one of the core or cladding, and is doped so that the wavelength dependency deviation of transmission loss of the wavelength division multiplex optical transmission line 10 is reduced.

In addition, a dispersion compensating optical fiber 13 is more preferable than the single mode optical fiber 12 as an optical fiber in which boron is doped. a reason why, since the wavelength dependency of transmission loss of the dispersion compensating optical fiber 13 is greater than that of the single mode optical fiber 12, there are many cases where it is enough to compensate only the wavelength dependency of transmission loss of the dispersion compensating optical fiber 13.

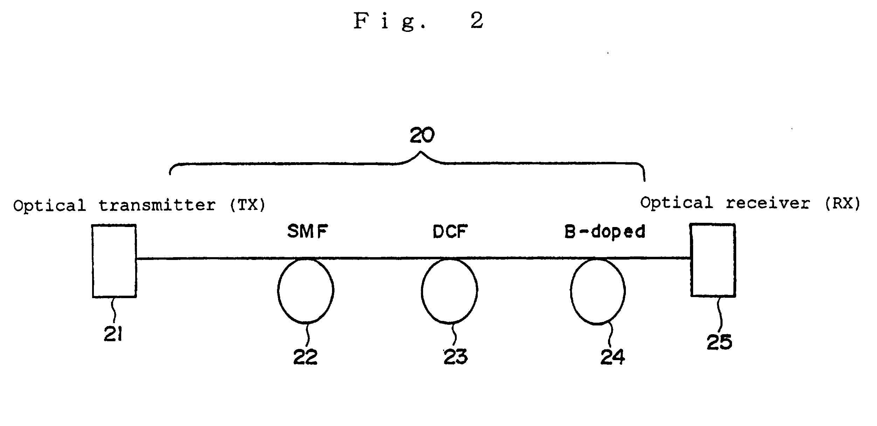

A wavelength division multiplex optical transmission line according to another preferred embodiment of the invention is constructed as shown in, for example, FIG.2. Herein, a wavelength division multiplex optical transmission line is indicated by 20, an optical transmitter (TX) is indicated by 21, a single mode optical fiber is indicated by 22, a dispersion compensating optical fiber is indicated by 23, a boron doped optical fiber is indicated by 24, and an optical receiver (RX) is indicated by 25. In addition, the boron doped optical fiber 24 has boron contained in at least the core or the cladding, wherein the amount of boron to be doped is determined so that the deviation of the wavelength dependency of transmission loss in the wavelength division multiplex optical transmission line 20 is decreased. Also, by connecting a boron doped optical fiber to the construction described in FIG. 1 in series, the construction shown in FIG. 2 may be obtained.

Moreover, it is preferable that the boron doped optical fiber 24 is, for example, an optical fiber having a zero dispersion wavelength at a band of 1.55µm, an optical fiber having a zero dispersion wavelength at a band of 1.55µm, an optical fiber capable of compensating dispersion characteristics at a band of 1.31µm, or an optical fiber making a single mode operation at a band of 1.55µm.

In addition, the boron doped optical fiber, for example, a single mode optical fiber 12, a dispersion compensating optical fiber 13, as shown in FIG. 1, or a boron doped optical fiber 24 as shown in FIG. 2 may be laid as a part of transmission lines or as a coil-shaped module. However, the pattern of use is not limited to these.

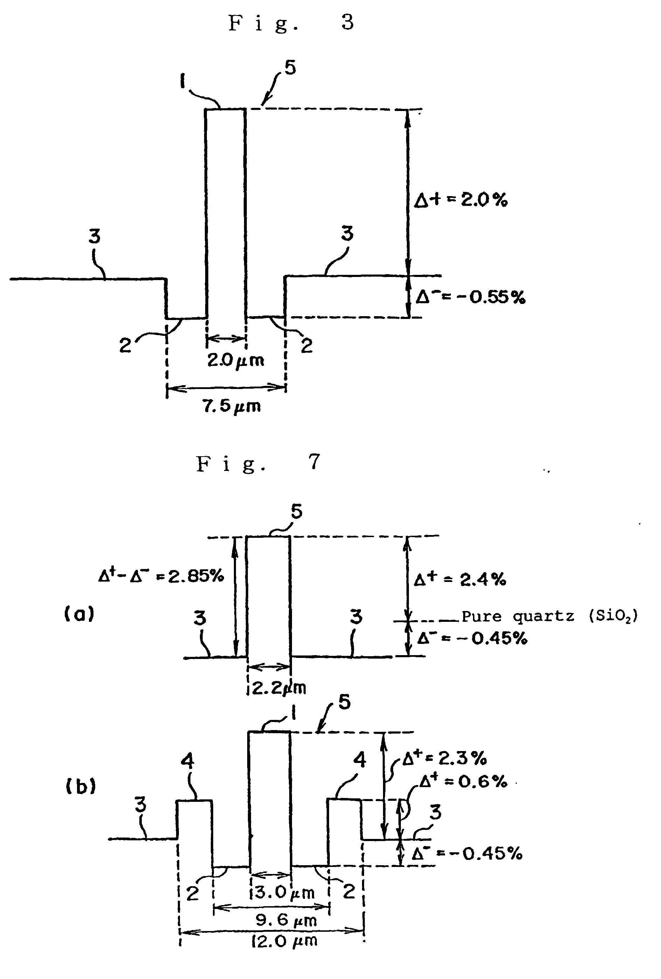

Next, taking an example, in which boron is doped to the dispersion compensating optical fiber 13 as shown in FIG. 1, for instance, a description is given of the boron doped optical fiber according to the preferred embodiment, which is preferably used for wavelength division multiplex optical transmission lines as shown in FIGS. 1 and 2. An optical fiber, to which boron is doped, (boron doped optical fiber) according to the preferred embodiment, is an optical fiber in which the core is covered with the inner cladding and further covered with the outer cladding. FIG. 3 shows a refractive index profile structure according to one preferred embodiment of the boron doped optical fiber according to the invention. As shown in the same drawing, the boron doped optical fiber, according to the preferred embodiment, has center core 1 (core 5) whose diameter is 2µm and inner cladding 2 whose diameter is 7.5µm, wherein the relationship between a refractive index n1 of the center core 1, refractive index n2 of the inner cladding 2, and refractive index n3 of the outer cladding is n1> n3> n2, and the refractive index profile represents a W-type profile. A feature of the preferred embodiment is in that boron is doped onto at least one of either the center core 1, inner cladding 2 or outer cladding 3.

Further, in the boron doped optical fiber according to the preferred embodiment, the outer cladding 3 is made of SiO₂ (pure quartz). At the center core 1, germanium Ge to increase the refractive index is doped on SiO₂ while fluorine F to reduce the refractive index is uniformly doped on SiO₂ at the inner cladding 2. The respective amounts of doping boron B, germanium Ge and fluorine F are shown in Experiment Nos. 2 through 14 in Table 1. Also, in Table 1, the doping elements of these elements are shown by values in the relative refractive index difference, which is produced by doping of the elements with respect to SiO₂. In addition, the composition of an optical fiber formed without doping boron onto any of the center core 1, inner cladding 2 and outer cladding 3 is shown, in Experiment No. 1 in Table 1, by values of the relative refractive index difference with respect to SiO₂.

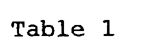

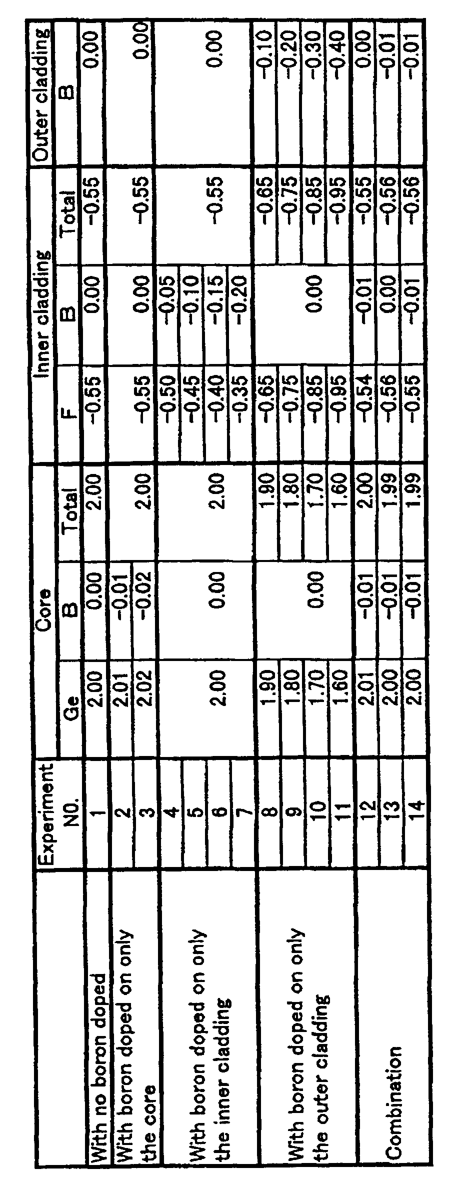

And, in boron doped optical fibers of the preferred embodiment shown in Experiment Nos. 2 through 7 and 12 through 14, as shown in Table 1 and FIG. 3, boron, germanium and fluorine are, respectively, doped so that the relative refractive index difference Δ+ of the center core 1 with respect to the outer cladding 3 becomes approximately 2.0% and the relative refractive index difference Δ- of the inner cladding 2 with respect to the outer cladding 3 becomes approximately -0.55%.

Further, Table 2 shows results of having investigated loss at a wavelength band of 1.55µm (wavelength 1520nm through 1580mn), for every 10nm interval in wavelength length in connection with the optical fibers in the above Experiment Nos. 1 through 14. Table 2 shows the values of the maximum loss and minimum loss in the above wavelength band, and the deviation values of wavelength dependency of transmission loss.

**Table 2**

| Experiment NO. | Loss | | | | | | | Maximum loss(dB) | Minimum loss(dB) | Deviation (%) |
|---|---|---|---|---|---|---|---|---|---|---|
| | 1520 | 1530 | 1540 | 1550 | 1560 | 1570 | 1580 | | | |
| 1 | 0.481 | 0.468 | 0.450 | 0.436 | 0.424 | 0.414 | 0.407 | 0.481 | 0.407 | 15 |
| 2 | 0.511 | 0.510 | 0.506 | 0.507 | 0.508 | 0.508 | 0.507 | 0.511 | 0.506 | 1 |
| 3 | 0.540 | 0.552 | 0.563 | 0.578 | 0.592 | 0.603 | 0.607 | 0.607 | 0.540 | 11 |
| 4 | 0.496 | 0.489 | 0.478 | 0.471 | 0.466 | 0.461 | 0.457 | 0.496 | 0.457 | 8 |
| 5 | 0.511 | 0.510 | 0.506 | 0.507 | 0.506 | 0.508 | 0.507 | 0.511 | 0.506 | 1 |
| 6 | 0.526 | 0.531 | 0.534 | 0.542 | 0.550 | 0.556 | 0.557 | 0.557 | 0.526 | 8 |
| 7 | 0.540 | 0.552 | 0.563 | 0.578 | 0.592 | 0.603 | 0.607 | 0.607 | 0.540 | 11 |
| 8 | 0.496 | 0.489 | 0.478 | 0.471 | 0.466 | 0.481 | 0.457 | 0.496 | 0.457 | 8 |
| 9 | 0.511 | 0.510 | 0.506 | 0.507 | 0.508 | 0.508 | 0.507 | 0.511 | 0.506 | 1 |
| 10 | 0.526 | 0.531 | 0.534 | 0.542 | 0.550 | 0.556 | 0.557 | 0.557 | 0.526 | 6 |
| 11 | 0.540 | 0.552 | 0.563 | 0.578 | 0.592 | 0.603 | 0.607 | 0.607 | 0.540 | 11 |
| 12 | 0.514 | 0.514 | 0.512 | 0.514 | 0.517 | 0.518 | 0.517 | 0.518 | 0.512 | 1 |
| 13 | 0.512 | 0.512 | 0.509 | 0.510 | 0.512 | 0.513 | 0.512 | 0.513 | 0.509 | 1 |
| 14 | 0.515 | 0.516 | 0.515 | 0.518 | 0.521 | 0.523 | 0.522 | 0.523 | 0.515 | 2 |

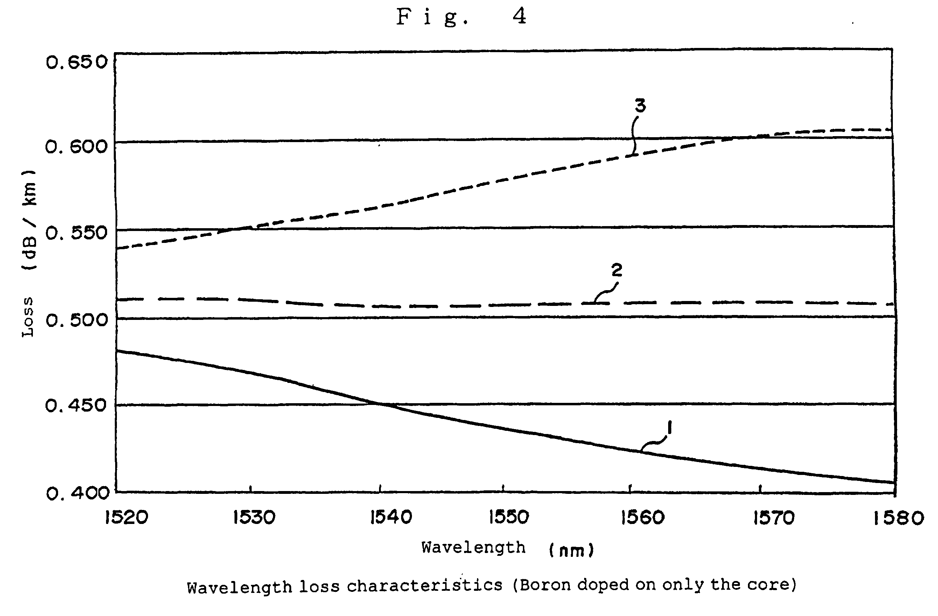

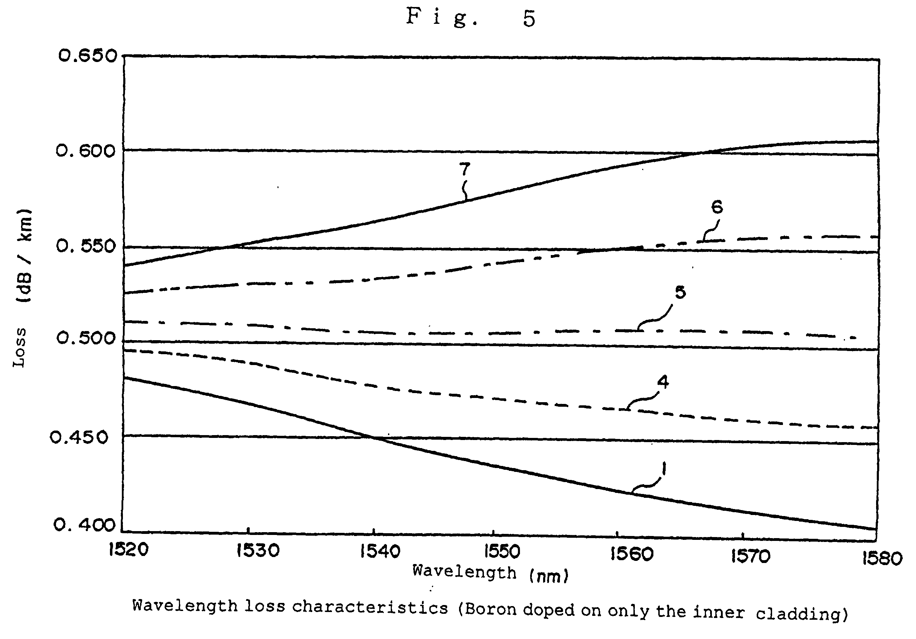

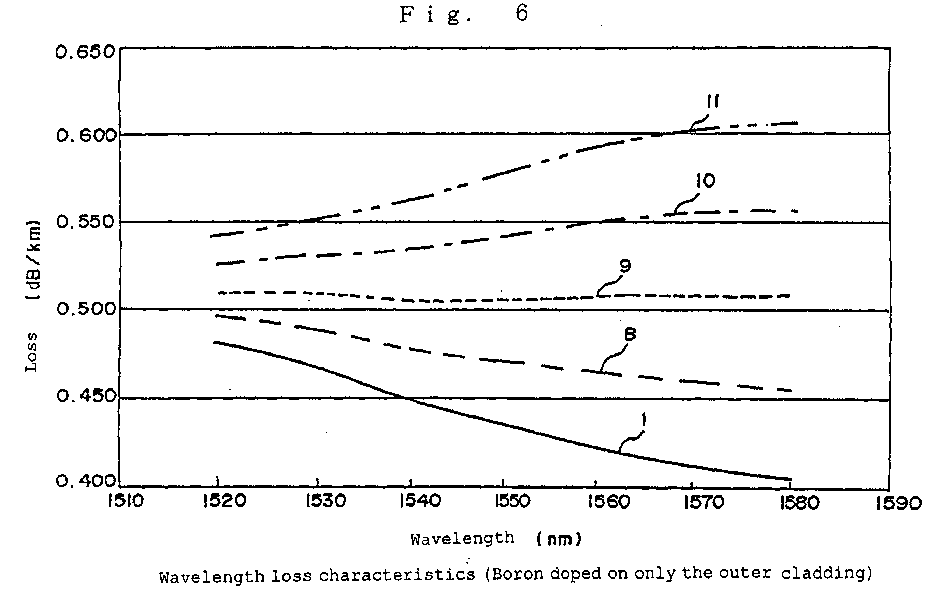

In addition, FIG. 4 through FIG. 6 are graphs showing results of having investigated loss in a wavelength 1520nm through 1580nm in connection with the optical fibers of the above Experiment Nos. 1 through 11. FIG. 4 shows data of Experiment Nos. 1 through 3, and FIG. 5 shows data of Experiment Nos. 1 and 4 through 7, and FIG. 6 shows data of Experiment Nos. 1, and 8 through 11. Also, in these drawings, numbers attached to the characteristic lines indicate the experiment numbers.

As has been made clear from these tables and drawings, in boron doped optical fibers (Experiment Nos. 2 through 14) according to the preferred embodiment, which is formed by doping boron to at least one of either the center core 1, inner cladding 2, or outer cladding 3, the deviation in wavelength dependency of transmission loss in the above wavelength band is made smaller than that of the optical fiber of a control shown in Experiment No. 1. Therefore, in view of flattening of the wavelength dependency of loss, it was found that these boron doped optical fibers could represent more satisfactory characteristics than those in the control optical fiber.

In particular, if an optical fiber is composed of the compositions shown in Experiment No. 2, 5, 9, 12, 13, or 14, since the wavelength dependency deviation of transmission loss at a wavelength band of 1550nm could be suppressed to a small value which is within 5%, it was found that very satisfactory characteristics could be obtained. Also, since light propagating in an optical fiber propagates mainly through the center core 1, if boron is doped onto the center core 1 as shown in the above Experiment Nos. 2 and 3, it is understood that a flattening effect of the wavelength dependency deviation of transmission loss by doping boron can be efficiently displayed. In the preferred embodiment, it was found that a flattening of the wavelength dependency deviation of transmission loss could be achieved with the doping amount equivalent to only one-tenth the case where boron is doped onto only the inner cladding 2, or one-twentieth the case wherein boron is doped onto only the outer cladding 3.

Also, the chromatic dispersion of the respective boron doped optical fibers according to the preferred embodiments shown in the above Experiment numbers at a wavelength band of 1550nm is approximately -80ps/nm/km, and the dispersion slope thereof is approximately -0.27ps/nm²/km, wherein if a boron doped optical fiber whose length is approximately one-fifth the length of the above single mode optical fiber is connected to the single mode optical fiber since the chromatic dispersion of a single mode optical fiber laid for the above optical transmission at a wavelength band of 1550nm is approximately 17ps/nm/km and the dispersion slope thereof is approximately 0.057ps/nm²/km, it was confirmed that the chromatic dispersion of an optical transmission line at a wavelength of 1550nm could be made to be almost zero.

According to the invention, as described above, the wavelength dependency deviation in a wavelength of 1550nm can be reduced. Therefore, by inserting an appropriate length (for example, one-fifth the length of a 1.3µm zero dispersion single mode optical fiber) of the boron doped optical fiber according to the preferred embodiment into the existing 1.3µm zero dispersion single mode optical fiber, the chromatic dispersion of the 1.3µm zero dispersion single mode optical fiber at the above wavelength band can be made to be almost zero, wherein it is possible to construct a satisfactory system capable of wavelength division multiplex transmission without damaging the flattening of the loss wavelength.

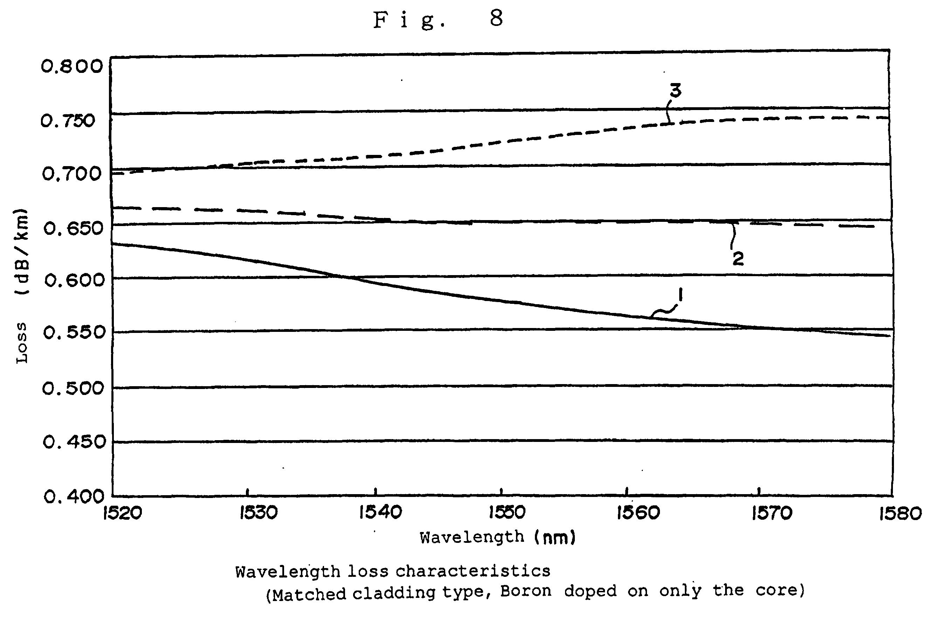

In the above preferred embodiment, the refractive index profile structure of a boron doped optical fiber is made into a W-type refractive index distribution structure. However, a boron doped optical fiber according to the invention may be, as shown in FIG. 7(a), made into a matched cladding type refractive index profile structure or as shown in FIG. 7(b), a segmented core type refractive index profile structure. Also, in FIG. 7, a segment layer is indicated by 4.

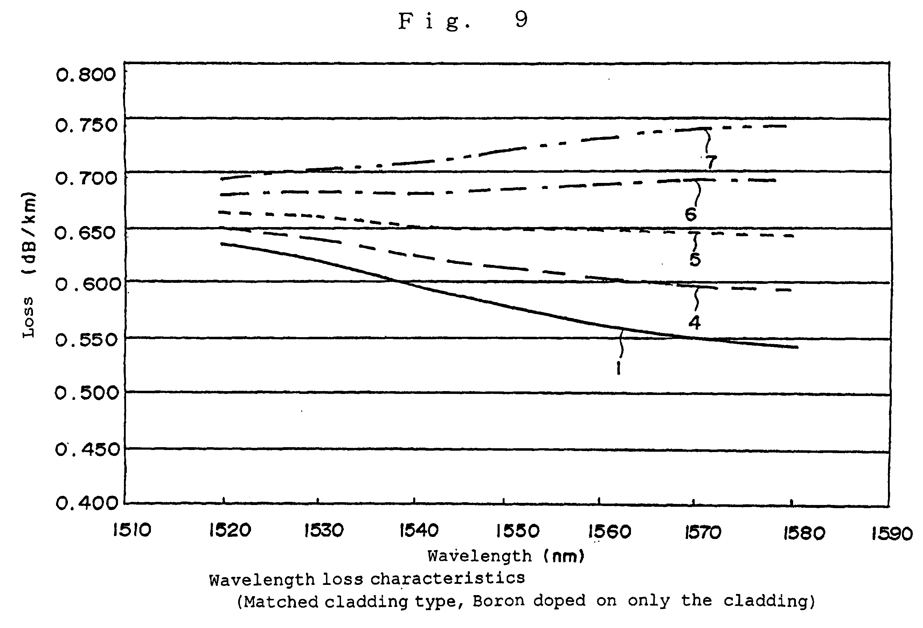

Next, a description is given of an experimental prototype of a matched cladding type boron doped optical fiber having a refractive index profile structure. Table 3 shows the composition of a dopant of the matched cladding type boron doped optical fiber having a refractive index profile structure in terms of values of the relative refractive index, and Table 4 shows data having investigated the transmission loss in a wavelength band of 1550nm (wavelength from 1520nm through 1580nm) for every 10nm interval. Also, Table 4 shows the value of the maximum loss and minimum loss in the above wavelength band along with the deviation values of the wavelength dependency of transmission loss. FIG. 8 and FIG. 9 are graphs showing the relationship between wavelengths and transmission loss of the respective optical fibers of Experiment Nos. 1 through 7 in Table 4, wherein numbers attached to the characteristic line in the respective graphs correspond to the experiment numbers.

Further, in boron doped optical fibers according to the preferred embodiment, which are shown in Experiment Nos. 2 through 8, as shown in Table 3 and FIG. 7(a), boron, germanium and fluorine are doped so that the relative refractive index difference Δ+ of the center core 1 with respect to pure quarts (SiO₂) becomes approximately 2.4% and therelative refractive index difference Δ- of the cladding 3 with respect to SiO₂ becomes approximately -0.45%.

**Table 3**

| | Experiment NO. | Core | | | Cladding | | |
|---|---|---|---|---|---|---|---|
| | | Ge | B | Total | F | B | Total |
| With no boron doped | 1 | 2.40 | 0.00 | 2.40 | -0.45 | 0.00 | -0.45 |
| With boron doped on only the core | 2 | 2.41 | -0.01 | 2.40 | -0.45 | 0.00 | -0.45 |
| | 3 | 2.42 | -0.02 | 2.40 | -0.45 | 0.00 | -0.45 |
| With boron doped on only the cladding | 4 | 2.40 | 0.00 | 2.40 | -0.40 | -0.05 | -0.45 |
| | 5 | 2.40 | 0.00 | 2.40 | -0.35 | -0.10 | -0.45 |
| | 6 | 2.40 | 0.00 | 2.40 | -0.30 | -0.15 | -0.45 |
| | 7 | 2.40 | 0.00 | 2.40 | -0.25 | - 0.20 | -0.45 |
| Combination | 8 | 2.41 | -0.01 | 2.40 | -0.42 | -0.03 | -0.45 |

**Table 4**

| Experiment NO. | Loss | | | | | | | Maximum loss (dB) | Minimum loss (dB) | Deviation (%) |
|---|---|---|---|---|---|---|---|---|---|---|
| | 1520 | 1530 | 1540 | 1550 | 1560 | 1570 | 1580 | | | |
| 1 | 0.635 | 0.619 | 0.596 | 0.578 | 0.563 | 0.551 | 0.543 | 0.635 | 0.543 | 14 |
| 2 | 0.664 | 0.661 | 0.652 | 0.649 | 0.648 | 0.646 | 0.643 | 0.664 | 0.643 | 3 |
| 3 | 0.694 | 0.703 | 0.708 | 0.720 | 0.732 | 0.740 | 0.743 | 0.743 | 0.694 | 7 |
| 4 | 0.649 | 0.640 | 0.624 | 0.614 | 0.606 | 0.598 | 0.593 | 0.649 | 0.593 | 9 |
| 5 | 0.664 | 0.661 | 0.652 | 0.649 | 0.648 | 0.646 | 0.643 | 0.664 | 0.643 | 3 |
| 6 | 0.679 | 0.682 | 0.680 | 0.685 | 0.690 | 0.693 | 0.693 | 0.693 | 0.679 | 2 |
| 7 | 0.694 | 0.703 | 0.708 | 0.720 | 0.732 | 0.740 | 0.743 | 0.743 | 0.694 | 7 |
| 8 | 0.673 | 0.673 | 0.669 | 0.671 | 0.673 | 0.674 | 0.673 | 0.674 | 0.669 | 1 |

As has been made clear on the basis of these prototype experiments, the deviation of wavelength dependency of transmission loss can be suppressed to 5% or less by composing a boron doped optical fiber so as to have the dopant composition shown in Experiment No. 2, 5, 6, or 8. As shown in the above Experiment Nos. 2 and 3, if boron is doped onto the center core 1 since light propagating in an optical fiber propagates mainly through the center core 1, it is understood that a flattening effect of the wavelength dependency deviations of transmission loss can be very efficiently displayed by doping boron. In the preferred embodiment, it is understood that a flattening of the wavelength dependency deviations for transmission loss can be achieved with only one-tenth the doping amount in a case where boron is doped onto only the cladding 3.

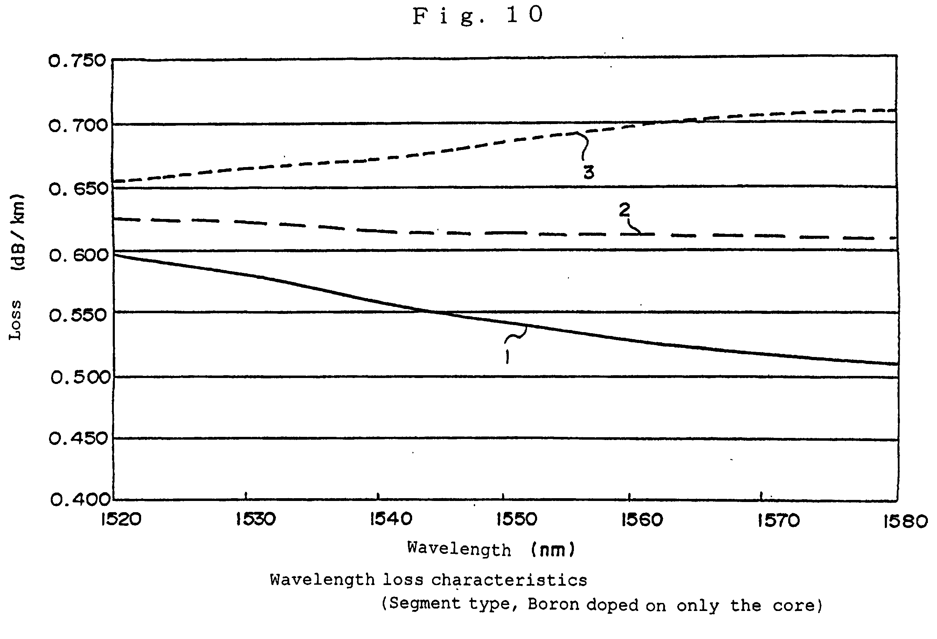

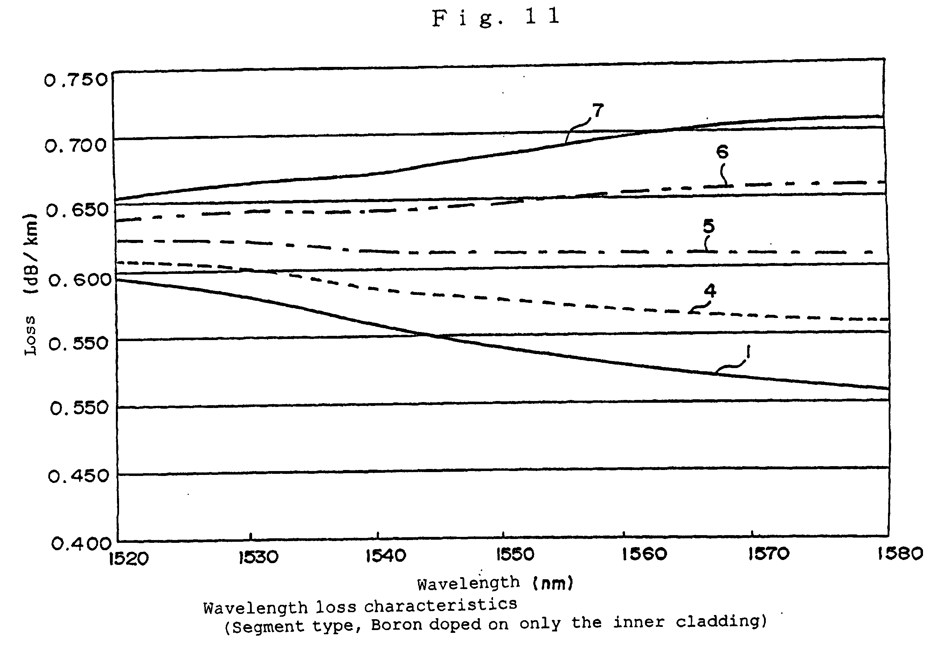

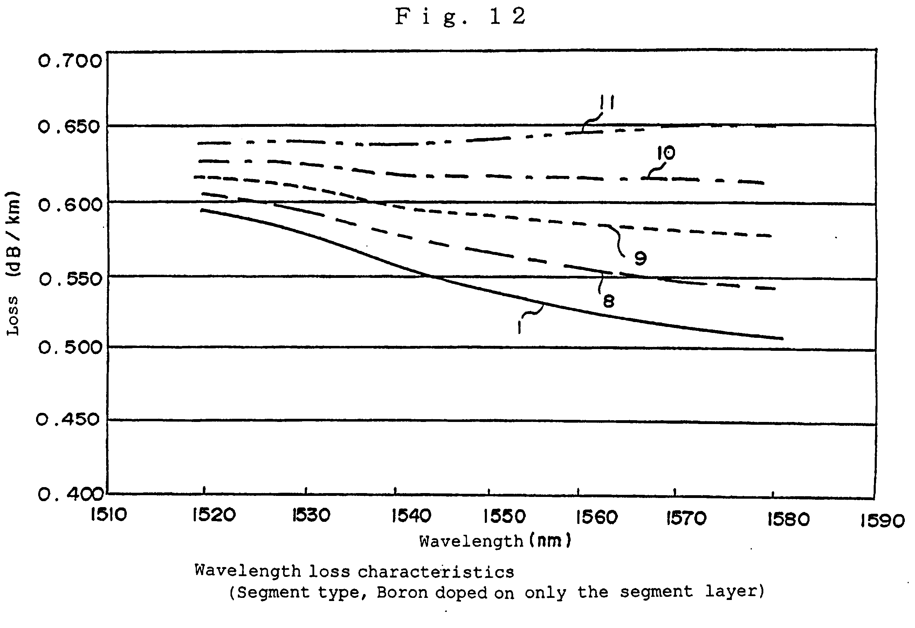

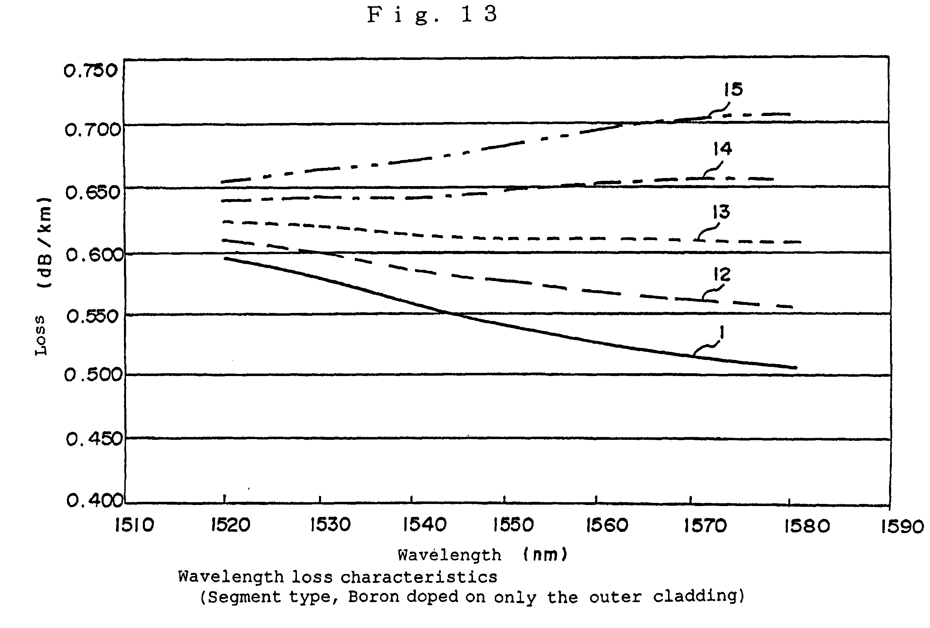

Next, a description is given of an experimental prototype of a boron doped optical fiber having a segmented core type refractive index profile structure. Table 5 shows a composition of a dopant of a boron doped optical fiber having a segmented core type refractive index profile structure, in terms of values of the relative refractive index difference, and Table 6 shows results having investigated the loss in a wavelength of 1550nm (wavelength from 1520nm through 1580nm) for every 10nm interval. Further, Table 6 shows values of the maximum loss and minimum loss in the above wavelength band, and deviation values of the wavelength dependency of transmission loss. FIG. 10 through FIG. 13 are graphs each showing the relationship between wavelengths and transmission loss of the respective optical fibers in Experiment Nos. 1 through 15 in Table 6, wherein numbers attached to the characteristic lines in the respective graphs correspond to the experiment numbers.

In addition, in boron doped optical fibers according to the preferred embodiment, which are shown in Experiment Nos. 2 through 11 and 16 through 26, boron, germanium and fluorine are, respectively, doped so that, as shown in Table 5 and FIG. 7(b), the relative refractive index difference Δ+ of the center core 1 with respect to the outer cladding 3 becomes approximately 2.3%, the relative refractive index difference Δ- of the inner cladding 2 with respect to the outer cladding 3 becomes approximately -0.45%, and the relative refractive index difference Δ+ of the segment layer 4 with respect to the outer cladding 3 becomes approximately 0.6%.

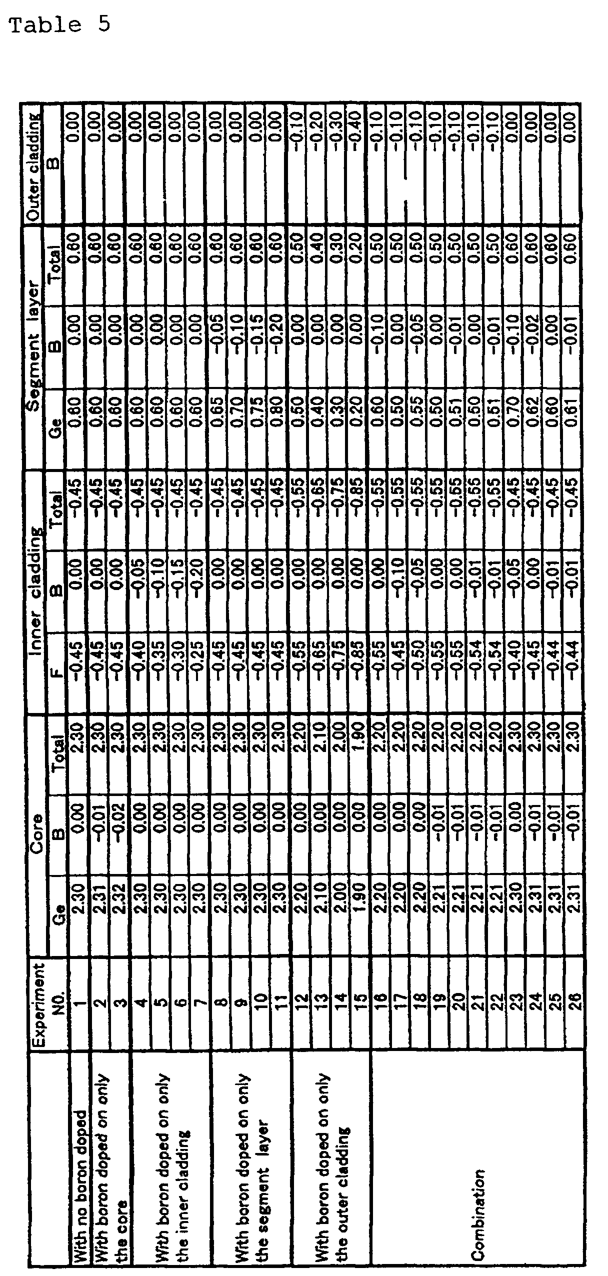

**Table 6**

| Experiment NO. | Loss | | | | | | | Maximum loss (dB) | Minimum loss (dB) | Deviation (%) |
|---|---|---|---|---|---|---|---|---|---|---|
| | 1520 | 1530 | 1540 | 1550 | 1560 | 1570 | 1580 | | | |
| 1 | 0.595 | 0.580 | 0.558 | 0.541 | 0.527 | 0.516 | 0.508 | 0.595 | 0.508 | 15 |
| 2 | 0.625 | 0.622 | 0.614 | 0.612 | 0.612 | 0.610 | 0.608 | 0.625 | 0.608 | 3 |
| 3 | 0.654 | 0.664 | 0.671 | 0.683 | 0.696 | 0.704 | 0.708 | 0.708 | 0.654 | 8 |
| 4 | 0.610 | 0.601 | 0.586 | 0.577 | 0.569 | 0.563 | 0.558 | 0.610 | 0.558 | 9 |
| 5 | 0.625 | 0.622 | 0.614 | 0.612 | 0.612 | 0.610 | 0.608 | 0.625 | 0.608 | 3 |
| 6 | 0.639 | 0.643 | 0.642 | 0.648 | 0.654 | 0.657 | 0.658 | 0.658 | 0.639 | 3 |
| 7 | 0.654 | 0.664 | 0.671 | 0.683 | 0.696 | 0.704 | 0.708 | 0.708 | 0.654 | 8 |
| 8 | 0.605 | 0.594 | 0.578 | 0.566 | 0.557 | 0.549 | 0.543 | 0.605 | 0.543 | 10 |
| 9 | 0.616 | 0.609 | 0.597 | 0.591 | 0.586 | 0.582 | 0.578 | 0.616 | 0.578 | 6 |
| 10 | 0.626 | 0.624 | 0.617 | 0.616 | 0.616 | 0.615 | 0.613 | 0.626 | 0.613 | 2 |
| 11 | 0.636 | 0.639 | 0.637 | 0.641 | 0.645 | 0.648 | 0.648 | 0.648 | 0.636 | 2 |
| 12 | 0.610 | 0.601 | 0.586 | 0.577 | 0.569 | 0.563 | 0.558 | 0.610 | 0.558 | 9 |
| 13 | 0.625 | 0.622 | 0.614 | 0.612 | 0.612 | 0.610 | 0.608 | 0.625 | 0.608 | 3 |
| 14 | 0.639 | 0.643 | 0.642 | 0.648 | 0.654 | 0.657 | 0.658 | 0.658 | 0.639 | 3 |
| 15 | 0.654 | 0.664 | 0.671 | 0.683 | 0.696 | 0.704 | 0.708 | 0.708 | 0.654 | 8 |
| 16 | 0.631 | 0.630 | 0.626 | 0.627 | 0.628 | 0.629 | 0.628 | 0.631 | 0.626 | 1 |
| 17 | 0.639 | 0.643 | 0.642 | 0.648 | 0.654 | 0.657 | 0.658 | 0.658 | 0.639 | 3 |
| 18 | 0.635 | 0.636 | 0.634 | 0.637 | 0.641 | 0.643 | 0.643 | 0.643 | 0.634 | 1 |
| 19 | 0.639 | 0.643 | 0.642 | 0.648 | 0.654 | 0.657 | 0.658 | 0.658 | 0.639 | 3 |
| 20 | 0.642 | 0.646 | 0.646 | 0.653 | 0.660 | 0.664 | 0.665 | 0.665 | 0.642 | 3 |
| 21 | 0.642 | 0.647 | 0.648 | 0.655 | 0.662 | 0.667 | 0.668 | 0.668 | 0.642 | 4 |
| 22 | 0.644 | 0.650 | 0.652 | 0.660 | 0.668 | 0.673 | 0.675 | 0.675 | 0.644 | 4 |
| 23 | 0.631 | 0.630 | 0.626 | 0.627 | 0.628 | 0.629 | 0.628 | 0.631 | 0.626 | 1 |
| 24 | 0.629 | 0.628 | 0.622 | 0.622 | 0.623 | 0.623 | 0.622 | 0.629 | 0.622 | 1 |
| 25 | 0.628 | 0.626 | 0.620 | 0.619 | 0.620 | 0.619 | 0.618 | 0.628 | 0.618 | 2 |
| 26 | 0.630 | 0.629 | 0.624 | 0.624 | 0.626 | 0.626 | 0.625 | 0.630 | 0.624 | 1 |

As has been made clear on the basis of the results of experiments of these prototypes, by composing a boron doped optical fiber having any of such compositions as shown in Experiment Nos. 2, 5, 6, 10, 11, 13, 14, and 16 through 26, the wavelength dependency deviation of transmission loss can be suppressed to 5% or less. In addition, since light propagating in optical fibers propagates mainly through the center core 1, if, as shown in the above Experiment Nos. 2 and 3, boron is doped onto the center core 1, it is understood that a flattening effect of the wavelength dependency deviation of transmission loss, which is brought about by the doping of boron, can be very efficiently displayed, wherein in the preferred embodiment, it is understood that a flattening of the wavelength dependency deviation of transmission loss can be achieved with only the doping amount equivalent to one-tenth the amount in the case of doping boron onto only the inner cladding 2, one-fifteenth the amount in the case of doping boron onto only the segment layer 4, and one-twentieth the amount in the case of doping boron onto only the outer cladding 3.

The present invention is not limited to the above preferred embodiments. The invention may be subjected to various modifications. For example, the compositions of the core 5 and cladding with respect to the center core 1 and inner cladding 2 which form a boron doped optical fiber, are not specially limited, but may be appropriately established. For example, by making the relative refractive index difference of the maximum refractive index of the core 5 with respect to the cladding into 0.8% or more, preferably 1% or more, it becomes possible to cause a boron doped optical fiber according to the invention to have negative dispersion, whereby positive dispersion of optical transmission lines can be securely compensated by inserting and connecting a boron doped optical fiber, according to the invention, to the existing optical transmission lines, and at the same time, as described above, a loss flattening can be achieved in a wide band required in wavelength division multiplex transmission, whereby it is possible to construct an optical transmission system suited to wavelength division multiplexing.

Furthermore, in the above preferred embodiment, for example, in FIG.3 and FIG. 7(b), although the chromatic dispersion was set to approximately -80ps/nm/km in a wavelength band of 1550nm of a boron doped optical fiber, and the dispersion slope thereof was set to approximately -0.27ps/nm²/km, it is not necessary that the chromatic dispersion and dispersion slope in a wavelength band of 1550nm are specially limited. The chromatic dispersion and dispersion slope may be appropriately established. For example, if the chromatic dispersion is set to -20ps/nm/km or less in a wavelength band of 1550nm, the chromatic dispersion of an optical transmission line composed of the existing single mode optical fiber in a wavelength band of 1550nm can be compensated by only a very short length of the boron doped optical fiber.

In addition, the invention is not limited by the respective preferred embodiments (including the experimental prototypes), but can be varied and modified within the scope not departing from the spirit of the invention.

### INDUSTRIAL APPLICABILITY

As described above, a wavelength division multiplex optical transmission line according to the invention and an optical fiber used for the same are suitable for use in wavelength division multiplex optical transmission lines in which high quality optical transmission is required with the wavelength dependency deviation of transmission loss decreased.

## Claims

1. A wavelength division multiplex optical transmission line being an optical transmission line used for a wavelength division multiplex optical transmission line, in which a single mode optical fiber having a zero dispersion wavelength in the vicinity of 1.31µm, and a dispersion compensating optical fiber for compensating dispersion characteristics in a wavelength band of 1.55µm of said single mode optical fiber are connected in series;
wherein said single mode optical fiber and said dispersion compensating optical fiber have cores covered with cladding, and boron is doped onto at least one of either said cores or cladding, in order to compensate the wavelength dependency of loss characteristics of said optical transmission line or said dispersion compensating optical fiber, and at least one of either said single mode optical fiber or dispersion compensating optical fiber.

2. a wavelength division multiplex optical transmission line being an optical transmission line used for a wavelength division multiplex optical transmission line and including a line in which a single mode optical fiber having a zero dispersion wavelength in the vicinity of 1.31µm and a dispersion compensating optical fiber for compensating dispersion characteristics at a wavelength band of 1.55µm of said single mode optical fiber are connected in series,
wherein said optical transmission line is composed so that another optical fiber, which is separate from said single mode optical fiber and dispersion compensating optical fiber, is connected in series, and
wherein said separate optical fiber is formed so as to have a core covered by cladding, and boron is doped onto at least one of either the core or the cladding of said separate optical fiber in order to compensate the wavelength dependency of the transmission loss characteristics of said optical transmission line.

3. A wavelength division multiplex optical transmission line as set forth in Claim 1 or 2, wherein an optical fiber to which boron is doped is laid as a line.

4. A wavelength division multiplex optical transmission line as set forth in Claim 1 or 2, wherein an optical fiber to which boron is doped is used as a module.

5. An optical fiber used for a wavelength division multiplex optical transmission line being an optical fiber which compensates dispersion characteristics of a wavelength division multiplex optical transmission line,
wherein the core of the optical fiber is formed so as to be covered by cladding, boron is doped onto at least one of either said core or cladding of said optical fiber in order to compensate the wavelength dependency of transmission loss characteristics of said optical transmission line or optical fiber itself, and said core includes germanium with the relative refractive index difference of the maximum refractive index of said core with respect to the cladding exceeding 0.8%.

6. An optical fiber used for a wavelength division multiplex optical transmission line as set forth in Claim 5, wherein a wavelength dispersion at a wavelength band of 1.55µm is established at -20ps/nm/km or less.

7. An optical fiber used for a wavelength division multiplex optical transmission line as set forth in Claim 5 or 6, wherein the deviation of wavelength dependency of transmission loss at a wavelength of 1520nm through 1580nm is 5% or less.
